**Europäisches Patentamt**

**European Patent Office** (11) Publication number: **0 024 362**

**Office européen des brevets** **B1**

(12) **EUROPEAN PATENT SPECIFICATION**

(45) Date of publication of patent specification: **05.10.83** (51) Int. Cl.³: **B 21 D 53/14, F 16 G 1/26**

(21) Application number: **80200682.5**

(22) Date of filing: **14.07.80**

(54) A method and apparatus for stretching an endless metal band.

(30) Priority: **21.08.79 NL 7906317**

(43) Date of publication of application:
**04.03.81 Bulletin 81/9**

(45) Publication of the grant of the patent:
**05.10.83 Bulletin 83/40**

(84) Designated Contracting States:
**AT BE CH DE FR GB IT LI LU NL SE**

(56) References cited:
**DE - B - 1 002 665**
**FR - A - 2 214 537**
**FR - A - 2 305 251**
**GB - A - 1 332 461**
**GB - A - 1 394 009**
**US - A - 3 200 627**
**US - A - 3 922 771**

(73) Proprietor: **Van Doorne's Transmissie B.V.**
**Dr. Hub van Doorneweg 120**
**NL-5026 RA Tilburg (NL)**

(72) Inventor: **Van der Zande, Cornelis Petrus**
**Beatrixstraat 2**
**Heeze (NL)**

(74) Representative: **Louet Feisser, Arnold Abraham**
**Alfred**
**Postbus 500**
**NL-5000 AM Tilburg (NL)**

Courier Press, Leamington Spa, England

A method and apparatus for stretching an endless metal band.

The invention relates to a method of stretching an endless, metal band, in which the band is placed around an expansible template having a discontinuous, substantially cylindrical circumferential surface, after which the band is stretched by radial expansion of the template.

Such a method is known from US—A— 3,922,771 according to which publication a package of endless, metal bands is stretched by placing same around an expansible cylindrical surface. In order to expand the cylindrical surface of the stretching template by means of axial displacement of a conical mandrel, said surface is formed by a ring wedge which is locally transversely cut so that the circumferential surface is discontinuous.

Such a discontinuity in the cylindrical surface results in that the band disposed around the cylindrical surface is not stretched uniformly along the entire circumference. Especially when a great accuracy of the dimensions and homogeneousness of the band is required, for instance upon application of the band as part of a driving belt as described in US—A— 4,080,841 a local difference in degree of stretching can be inadmissible.

In GB—A—1 395 009 a device for stretching tubes for containing toothpaste is described, in which an expansible mandrel and a surrounding sleeve of resilient material such as rubber or a suitable plastics material are provided to expand a cylindrical tube to a taper form so that the tubes can be nested together.

A purely radial expansion of the expansible mandrel and the surrounding sleeve of resilient material is, however, not envisaged so that the teaching of this document is not immediately applicable for the stretching of a cylindrical metal band while maintaining its cylindrical form.

The application of a lubricant, such as fat, between the cylindrical surface and the band to be stretched appears to eliminate the above drawback only partly, while a substantial drawback thereof is that the lubricant may result in pollution of the cylindrical surface, which is highly detrimental to the quality of the stretched band.

It is the object of the invention to provide a method in which the above drawbacks are avoided and wherein a highly uniform stretching of the endless metal band is achieved.

To this effect according to the invention, there is disposed between the expansible template and the band an endless, resilient deformable ring. This ring, which abuts with the radial inner side against the discontinuous, substantially cylindrical surface of the template, forms at the radial outer side a continuous supporting surface for the endless metal band. In practice it appears that with such a ring a high degree of homogeneousness of the stretched band is obtained.

Another major advantage of the use of such a ring is the possibility, naturally within certain limits, to stretch endless metal bands of different diameters on the same apparatus by applying resiliently deformable rings of equal inner diameters and different outer diameters.

Preferably according to the invention the resiliently deformable ring in axial direction is wider than the metal band, which enhances the support of the edge of the metal band.

According to a further feature of the invention, the ring in radial direction has preferably a thickness ranging between 1 and 5 mm and the ring consists of synthetic material of a hardness of at least shore A 90.

The invention furthermore concerns an apparatus for stretching an endless metal band, provided with a discontinuous, substantially cylindrical radially expansible circumferential surface, said apparatus according to the invention being characterized by an endless, resiliently deformable ring, which is disposed around the circumferential surface.

The substantially cylindrical surface may hereby be formed by an annular wedge discontinuous in one place, as described in US—A— 3,922,771.

According to still another feature of the invention, the circumferential surface is formed by a plurality of segments which are displaceable radially through a central mandrel. At a specific degree of expansion of the surface this results in a smaller variation of the size of the discontinuity(ties) of the substantially cylindrical surface.

One embodiment of the apparatus for stretching an endless, metal band, shortly indicated as stretching template, will now be described, by way of example, with reference to the accompanying diagrammatic drawing.

Fig. 1 is a top view of the stretching template, and

Fig. 2 is a cross section on the line II—II of Fig. 1.

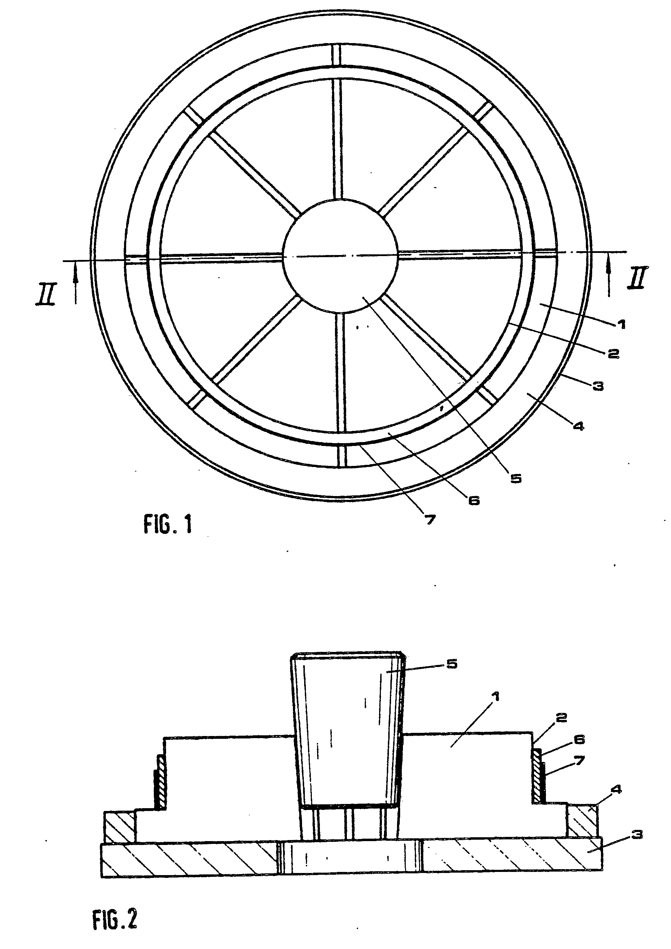

The embodiment is provided with eight segments 1, which together form a substantially cylindrical surface 2. The segments rest slidably on a base plate 3, which is fitted with an annular stop 4. When the segments 1 have been displaced maximally radially outwardly, they rest against the annular stop 4, as shown on the drawing (Fig. 2).

The segments 1 may be displaced radially outwardly by axial movement of conical wedge 5, which coacts with the radially inwardly oriented parts of the segments 1.

Around the substantially cylindrical surface 2, there is disposed a resiliently deformable ring 6 wherearound the endless band 7 to be stretched is represented.

The stretching of an endless metal band 7 is effected as follows. When the wedge 5 is in a higher position as shown in Fig. 2, and the segments 1 have been moved inwardly, there is applied around the resiliently deformable ring 6 an endless metal band 7. Subsequently, wedge 5 is moved downwards until the segments 1 contact the annular stop 4. The resiliently deformable ring 6 and the metal band 7 are then stretched at a larger diameter, whereby the ring 6 is only resiliently deformed and the band 7 has been subjected to the required plastic deformation. After wedge 5 has again been moved upwards, the segments 1 are pressed radially inwardly by the resiliently deformable ring 6 or by other means, after which the stretched band 7 can be removed and a following band to be stretched may be applied on the stretching template.

Such an operation of the endless metal band 7 may be important for improving the mechanical or physical properties of the band and/or for bringing the metal band accurately to a specific size.

Naturally, it is also possible to stretch a plurality of endless metal bands, whether or not of equal diameters, simultaneously or the same stretching template by using a wide resiliently deformable ring or more rings, if necessary of different outer diameters.

Also the stretching template may be designed with different circumferential surfaces of different diameters.

It is also possible to stretch a plurality of endless bands, which are combined as one package, through the method according to the invention or with the apparatus according to the invention.

## Claims

1. A method of stretching an endless, metal band (7), in which the band (7) is placed about an expansible template (1), said template (1) having a discontinuous, substantially cylindrical circumferential surface, after which the band (7) is stretched by radial expansion of the template (1) characterized in that between the template (1) and the band (7) there is applied an endless, resiliently deformable ring (6).

2. A method according to claim 1, characterized in that the resiliently deformable ring (6) in axial direction is wider than the metal band (7).

3. A method according to claim 1 or 2, characterized in that the ring (6) in radial direction has a thickness ranging between 1 and 5 mm.

4. A method according to any one of the preceding claims, characterized in that the ring (6) consists of synthetic material, having a hardness of at least shore A 90.

5. An apparatus for stretching an endless, metal band (7), provided with a discontinuous, substantially cylindrical, radially expansible circumferential surface for carrying out the method of claims 1 to 4, characterized by an endless, resiliently deformable ring (6) which is applied about the circumferential surface.

6. An apparatus according to claim 5, characterized in that the circumferential surface is formed by a plurality of segments (1) which are movable radially by means of a central mandrel (5).

7. An apparatus according to claim 5 or 6, characterized in that the resiliently deformable ring (6) in radial direction has a thickness between 1 and 5 mm.

8. An apparatus according to any one of claims 5—7, characterized in that the ring (6) consists of synthetic material and has a hardness of at least shore A 90.

## Patentansprüche

1. Verfahren zum Strecken eines endlosen Metallbands (7), bei dem das Band (7) um eine erweiterbare Lehre (1), die eine unterbrochene, im wesentlichen zylindrische Umfangsfläche hat, angeordnet und danach durch radiale Erweiterung der Lehre (1) gestreckt wird, dadurch gekennzeichnet, dass zwischen der Lehre (1) und dem Band (7) ein endloser, elastisch verformbarer Ring (6) angeordnet wird.

2. Verfahren nach Anspruch 1, dadurch gekennzeichnet, dass der elastisch verformbare Ring (6) in axialer Richtung breiter ist als das Metallband (7).

3. Verfahren nach Anspruch 1 oder 2, dadurch gekennzeichnet, dass der Ring (6) in radialer Richtung eine Dicke im Bereich zwischen 1 und 5 mm hat.

4. Verfahren nach einem der vorangehenden Ansprüche, dadurch gekennzeichnet, dass der Ring (6) aus Kunststoff einer Shore-Härte von wenigstens A 90 besteht.

5. Vorrichtung zum Strecken eines endlosen Metallbands (7), mit einer unterbrochenen, im wesentlichen zylindrischen, radial erweiterbaren Umfangsfläche, zur Durchführung des Verfahrens nach den Ansprüchen 1 bis 4, gekennzeichnet durch einen endlosen, elastisch verformbaren Ring (6), der um die Umfangsfläche angeordnet ist.

6. Vorrichtung nach Anspruch 5, dadurch gekennzeichnet, dass die Umfangsfläche durch mehrere Segmente (1) gebildet ist, die mittels eines zentralen Dorns (5) radial bewegbar sind.

7. Vorrichtung nach Anspruch 5 oder 6, dadurch gekennzeichnet, dass der elastisch verformbare Ring (6) in radialer Richtung eine Dicke zwischen 1 und 5 mm hat.

8. Vorrichtung nach einem der Ansprüche 5 bis 7, dadurch gekennzeichnet, dass der Ring (6) aus Kunststoff besteht und eine Shore-Härte von wenigstens A 90 hat.

## Revendications

1. Procédé pour étirer une bande métallique sans fin (7), selon lequel la bande (7) est placée autour d'un gabarit expansible (1), ledit gabarit (1) présentant une surface circonférentielle discontinue et sensiblement cylindrique, suite à quoi la bande (7) est étirée par expansion radiale du gabarit (1), caractérisé en ce qu'entre la gabarit (1) et la bande (7) est disposé un anneau sans fin et élastiquement déformable (6).

2. Procédé selon la revendication 1, caractérisé en ce que l'anneau (6) qui est élastiquement déformable en direction axiale est plus large que la bande métallique (7).

3. Procédé selon la revendication 1 ou 2, caractérisé en ce que l'anneau (6) présente en direction radiale une épaisseur comprise entre 1 et 5 mm.

4. Procédé selon l'une quelconque des revendications précédentes, caractérisé en ce que l'anneau (6) consiste en une matière synthétique dont la dureté Shore A est d'au moins 90.

5. Appareil pour étirer une bande métallique sans fin (7), comprenant une surface circonférentielle discontinue, sensiblement cylindrique et radialement expansible pour mettre en oeuvre le procédé des revendications 1 à 4, caractérisé par un anneau sans fin et élastiquement déformable (6) qui est disposé autour de la surface circonférentielle.

6. Appareil selon la revendication 5, caractérisé en ce que la surface circonferentielle est constituée par plusieurs segments (1) pouvant être déplacés radialement au moyen d'un mandrin central (5).

7. Appareil selon la revendication 5 ou 6, caractérisé en ce que l'anneau (6) qui est élastiquement déformable en direction radiale a une épaisseur comprise entre 1 et 5 mm.

8. Appareil selon l'une quelconque des revendications 5 à 7, caractérisé en ce que l'anneau (6) est réalisé en une matière synthétique dont la dureté Shore A est d'au moins 90.

FIG. 1

FIG.2

0 024 362